# EUROPÄISCHE PATENTANMELDUNG

(11) **EP 4 096 186 A1**
(43) Veröffentlichungstag der Anmeldung: **30.11.2022**
(21) Anmeldenummer: 21175999.8
(22) Anmeldetag: 26.05.2021
(51) Int. Cl.: H04L 29/08, G05B 19/042, G06F 21/52, G05B 21/00, G05B 19/418

(54) **VERFAHREN UND SYSTEM ZUR GESICHERTEN AUSFÜHRUNG VON STEUERUNGSANWENDUNGEN, PROGRAMMABLAUFSTEUERUNGSEINRICHTUNG UND ÜBERPRÜFUNGSEINRICHTUNG**

(71) Anmelder: Siemens Aktiengesellschaft, 80333 München (DE)
(72) Erfinder: Falk, Rainer, 85586 Poing (DE); Feist, Christian Peter, 80689 München (DE); Pfau, Axel, 80333 München (DE); Pyka, Stefan, 85570 Markt Schwaben (DE); Schneider, Daniel, 80796 München (DE); Sperl, Franz, 92526 Oberviechtach (DE)

(57) **Zusammenfassung**

Für zumindest eine Steuerungsanwendung (113, 123) wird zumindest ein Ereignis festgelegt, das bei einer potentiellen Manipulation von der Steuerungsanwendung zugeordnetem Programmcode und/oder zumindest eines Peripheriegeräts (510), das an eine den Programmcode verarbeitende Programmablaufsteuerungseinrichtung (101, 102) angeschlossen ist, ausgelöst wird. Die Programmablaufsteuerungseinrichtung überwacht einen Ablauf der Steuerungsanwendung auf Abweichungen von einem erwarteten Ablaufverhalten und löst bei einer Abweichung das festgelegte Ereignis aus. Der Programmcode wird nach Auslösung des festgelegten Ereignisses weiter durch die Programmablaufsteuerungseinrichtung verarbeitet und das Ereignis wird an eine von der Programmablaufsteuerungseinrichtung separierte Überprüfungseinrichtung (300) gemeldet. Die Überprüfungseinrichtung überführt die Steuerungsanwendung und zu dieser in einem Abhängigkeitsverhältnis stehenden Steuerungskomponenten bei Erkennung eines entsprechend den Prüfregeln unzulässigen Ablaufverhaltens der Steuerungsanwendung in einen vordefinierten sicheren Betriebszustand.

## Beschreibung

Die vorliegende Erfindung betrifft ein Verfahren und System zur gesicherten Ausführung von Steuerungsanwendungen sowie eine Programmablaufsteuerungseinrichtung, insbesondere eine Programmablaufsteuerungseinrichtung eines Geräts innerhalb eines industriellen Automatisierungssystems, und eine Überprüfungseinrichtung. Das System, die Programmablaufsteuerungseinrichtung und die Überprüfungseinrichtung sind zur Durchführung des erfindungsgemäßen Verfahrens vorgesehen.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung oder einer anderen Automatisierungsdomäne zur Steuerung, Regelung oder Überwachung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

In WO 2020/182627 A1 ist ein Verfahren zur Überwachung der Integrität eines industriellen Cyber-physischen Systems beschrieben, bei dem Messdaten, die mit verschiedenen Sensoren des Cyber-physischen Systems erfasst wurden, bzw. Steuerdaten, die für verschiedene Aktuatoren des Cyber-physischen Systems bestimmt sind, bereitgestellt bzw. abgegriffen werden. Außerdem wird wenigstens ein Messdaten-Zusammenhangsparameter zwischen den mit den verschiedenen Sensoren erfassten Messdaten ermittelt, bzw. es wird wenigstens ein Steuerdaten-Zusammenhangsparameter zwischen den für die verschiedenen Aktuatoren bestimmten Steuerdaten ermittelt. Der wenigstens eine Messdaten-Zusammenhangsparameter wird mit einer Messdaten-Zusammenhangs-Referenz verglichen, bzw. der wenigstens eine Steuerdaten-Zusammenhangsparameter wird mit einer Steuerdaten-Zusammenhangs-Referenz verglichen. Basierend auf dem Vergleich wird die Integrität des zu überwachenden Cyber-physischen Systems beurteilt.

Aus WO 2020/212051 A1 ist ein industrielles Automatisierungsgerät bekannt, das eine Überwachungseinheit zur Überprüfung und Überwachung des Integritätszustandes des industriellen Automatisierungsgerätes umfasst. Außerdem ist zumindest eine Gerätekomponente vorgesehen, die rückwirkungsfrei über eine Kommunikationsverbindung mit der Überwachungseinheit kommuniziert. Dabei umfasst die rückwirkungsfreie Kommunikation ein Bereitstellen wenigstens eines Gerätekomponentenparameters von der Gerätekomponente an die Überwachungseinheit. Die Überwachungseinheit ist dazu ausgebildet, den bereitgestellten Gerätekomponentenparameter der Gerätekomponente des industriellen Automatisierungsgerätes zur Überprüfung und Überwachung des Integritätszustandes des industriellen Automatisierungsgerätes zu protokollieren und zu verarbeiten. Des Weiteren ist die Überwachungseinheit dazu ausgebildet, den Integritätszustand des industriellen Automatisierungsgerätes als Ergebnis des verarbeiteten Gerätekomponentenparameters der Gerätekomponente des industriellen Automatisierungsgerätes zu protokollieren bzw. bereitzustellen. Darüber hinaus ist die Überwachungseinheit als eine vertrauenswürdige Gerätekomponente durch einen Manipulationsschutz manipulationsgeschützt in dem industriellen Automatisierungsgerät ausgebildet.

Aus der älteren europäischen Patentanmeldung 20157998.4 ist ein computergestütztes Verfahren zum Überwachen eines Integritätsstatus einer Rechenvorrichtung bekannt, bei dem zunächst ein Initialisierungswert für einen Gesamtintegritätswert festgelegt wird. Danach wird der Gesamtintegritätswert in einem vertrauenswürdigen Speicherbereich einer Speichereinheit gespeichert. Anschließend erfolgt das Ermitteln eines Integritätsstatus durch ein Integritätserkennungssystem und Erzeugen eines Integritätsstatuswertes. Danach erfolgt das Speichern des Integritätsstatuswertes in dem Gesamtintegritätswert in dem vertrauenswürdigen Speicherbereich als Integritätsstatus.

Zur Verhinderung eines Ausnutzens von bestehenden Schwachstellen in Programmcode können beispielsweise Compilerbasierte Exploit Protection Konzepte genutzt werden, die in den Programmcode während eines Kompiliervorgangs zusätzliche Schutz- bzw. Überprüfungsroutinen einfügen. Derartige Schutzkonzepte können rein Software-basiert oder mit Hardware-Unterstützung realisiert sein. Insbesondere können mit diesen Schutzkonzepten Bedrohungen wie Code Injection, Buffer Overflows, Return-oriented Programming (ROP) und Jump-oriented Programming (JOP) zur Laufzeit erkannt werden. Bei Erkennung eines potentiellen Angriffs wird beispielsweise eine Fehlermeldung in einer Kommandozeile ausgegeben oder eine Programmausführung umgehend gestoppt. Auf diese Weise wird eine Ausnutzung von bestehenden Schwachstellen erschwert. Üblicherweise werden Methoden zur Erkennung von Angriffen sowie Maßnahmen zur Reaktion auf erkannte Angriffe während des Kompiliervorgangs festgelegt und sind damit zur Laufzeit nicht mehr änderbar.

Trotz Anwendung von Schutzmaßnahmen kann eine böswillige Manipulation von Programmcode für durch industrielle Automatisierungsgeräte bereitgestellte Steuerungsanwendungen nicht immer vermieden werden. Häufig sind Patches, die auf eine Behebung von Schwachstellen im Programmcode abzielen, nicht hinreichend zeitnah zur Anwendung verfügbar oder können nicht zeitnah eingespielt werden. Insbesondere laufende technische Prozesse oder betriebliche Restriktionen in einer Anlage erlauben dies nicht zu jedem beliebigen Zeitpunkt. Zudem kann sich eine Beseitigung von Schwachstellen durch Codeanpassungen je nach verwendeter Programmiersprache mehr oder weniger kompliziert gestalten. Auch wenn viele Schutzkonzepte eine gute Balance zwischen Software-Leistung und Schutzniveau ermöglichen, kann es grundsätzlich zu Fehlalarmen (False Positives) kommen, die einen Angriff auf Programmcode signalisieren, obwohl kein Angriff vorliegt. In industriellen Automatisierungssystemen ist es äußerst problematisch, wenn Automatisierungsprozesse aufgrund solcher Fehlalarme gestoppt werden. Üblicherweise führt dies zu kostspieligen, unnötigen Unterbrechungen, Qualitätsproblemen oder gar Sicherheitsrisiken. Aufgrund dieser Probleme sind bestehende Exploit Protection Konzepte bei industriellen Automatisierungsgeräten häufig nicht anwendbar.

Der vorliegenden Erfindung liegt die Aufgabe zugrunde, ein Verfahren zur gesicherten Ausführung von Steuerungsanwendungen zu schaffen, das insbesondere bei Rückgriff auf Exploit Protection Konzepte eine erhöhte Zuverlässigkeit durch korrekt erfasste Bedrohungen und eine Vermeidung von durch Fehlalarme bedingten Ablaufunterbrechungen ermöglicht, sowie eine geeignete Implementierung zur Durchführung des Verfahrens anzugeben.

Diese Aufgabe wird erfindungsgemäß durch ein Verfahren mit den in Patentanspruch 1 angegebenen Merkmalen, durch ein System mit den in Patentanspruch 13 angegebenen Merkmalen, durch eine Programmablaufsteuerungseinrichtung mit den in Patentanspruch 14 angegebenen Merkmalen und durch eine Überprüfungseinrichtung mit den in Patentanspruch 15 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur gesicherten Ausführung von Steuerungsanwendungen wird für zumindest eine Steuerungsanwendung zumindest ein Ereignis festgelegt, das bei einer potentiellen Manipulation von der Steuerungsanwendung zugeordnetem Programmcode bzw. zumindest eines Peripheriegeräts, das an eine den Programmcode verarbeitende Programmablaufsteuerungseinrichtung angeschlossen ist, ausgelöst wird. Die Programmablaufsteuerungseinrichtung überwacht einen Ablauf der Steuerungsanwendung auf Abweichungen von einem erwarteten Ablaufverhalten und löst bei einer Abweichung das festgelegte Ereignis aus. Dabei kann das Ereignis insbesondere eine Benennung einer Codestelle innerhalb des Programmcodes, eines Eintrittszeitpunkts des festgelegten Ereignisses, einer Ereignisart bzw. einer Fehlerart umfassen.

Erfindungsgemäß wird der Programmcode nach Auslösung des festgelegten Ereignisses weiter durch die Programmablaufsteuerungseinrichtung verarbeitet, und das Ereignis wird an eine von der Programmablaufsteuerungseinrichtung separierte Überprüfungseinrichtung gemeldet. Bei Meldung des Ereignisses analysiert die Überprüfungseinrichtung das Ablaufverhalten der Steuerungsanwendung sowie zu dieser in einem Abhängigkeitsverhältnis stehende Steuerungskomponenten anhand aktualisierbarer Prüfregeln. Insbesondere können die Prüfregeln unabhängig vom Ablauf der Steuerungsanwendung aktualisiert werden. Vorzugsweise analysiert die Überprüfungseinrichtung Manipulationen des der Steuerungsanwendung zugeordneten Programmcodes und der zu dieser im Abhängigkeitsverhältnis stehende Steuerungskomponenten in Kombination. Darüber hinaus kann die Überprüfungseinrichtung das Ablaufverhalten der Steuerungsanwendung sowie die zu dieser im Abhängigkeitsverhältnis stehenden Steuerungskomponenten vorteilhafterweise abhängig von einem Betriebszustand der Programmablaufsteuerungseinrichtung bzw. von zumindest einem ausgewählten Zustand analysieren.

Bei Erkennung eines entsprechend den Prüfregeln unzulässigen Ablaufverhaltens der Steuerungsanwendung überführt die Überprüfungseinrichtung die Steuerungsanwendung und die zu dieser im Abhängigkeitsverhältnis stehenden Steuerungskomponenten erfindungsgemäß in einen vordefinierten sicheren Betriebszustand. Dies bietet als Vorteil, dass insbesondere auf industriellen Automatisierungsgeräten ablaufende Software vor Angriffen zuverlässig geschützt werden kann, jedoch dafür nicht unmittelbar angehalten werden muss. Vielmehr kann zunächst sichergestellt werden, dass ein Angriff nicht fälschlicherweise als solcher erkannt wird. Damit können in Verdachtsfällen bei potentiell sicherheitskritischen Fehlermeldungen kontrollierte Maßnahmen eingeleitet werden. Dadurch wird ermöglicht, ein gesteuertes technisches System kontrolliert herunterzufahren, auf kontrollierte Weise in einem eingeschränkten Betriebsmodus (fail operational) weiter zu betreiben oder kontrolliert in einen betriebssicheren Fehler-Betriebszustand (fail safe) zu versetzen. Durch eine an die Überprüfungseinrichtung ausgelagerte Analyse eines möglichen Angriffs, können die Prüfregeln insbesondere während einer Testphase zuverlässig angelernt bzw. definiert werden. Eine Anpassung der Software selbst ist nicht notwendig. Insgesamt können erkannte potentielle Angriffe durch die an die Überprüfungseinrichtung ausgelagerte Analyse mit einer deutlich höheren Wahrscheinlichkeit korrekt bewertet werden.

Vorzugsweise umfasst der vordefinierte sichere Betriebszustand ein Stoppen der Steuerungsanwendung, ein Stoppen der zur Steuerungsanwendung im Abhängigkeitsverhältnis stehenden Steuerungskomponenten, ein Aktivieren eines Fehler-Betriebsmodus eines mittels der Steuerungsanwendung implementierten industriellen Automatisierungsgeräts bzw. eine Meldung eines Alarms an einen Betreiber eines das Automatisierungsgerät umfassenden industriellen Automatisierungssystems. Alternativ oder zusätzlich kann im vordefinierten sicheren Betriebszustand eine Rekonfiguration einer Ausgabeschittstelle, insbesondere eine Aktivierung eines Fail-Safe-Modus, vorgenommen werden. Darüber hinaus können die Steuerungsanwendung und die zu dieser im Abhängigkeitsverhältnis stehenden Steuerungskomponenten durch eine Überführung in den vordefinierten sicheren Betriebszustand innerhalb einer festgelegten Zeitdauer nach der Meldung des Ereignisses gestoppt werden.

Der Programmcode der Steuerungsanwendung wird vorzugsweise mittels eines ersten Compile Flags erstellt. Durch das erste Compile Flag wird im Programmcode zumindest eine Codesequenz zur Durchführung von Überprüfungen bei indirekten Funktionssprüngen aktiviert, wobei die Überprüfungen bei jedem Ablauf der Steuerungsanwendung durchgeführt werden. Durch die Überprüfungen kann bei Funktionsaufrufen insbesondere jeweils ein Funktionsprototyp einer aufgerufenen Funktion überprüft werden. Funktionsprototypen umfassen insbesondere Anzahl und Typ von Aufrufparametern und Rückgabewerten.

Entsprechend einer weiteren bevorzugten Ausgestaltung der vorliegenden Erfindung wird der Programmcode der Steuerungsanwendung mittels eines zweiten Compile Flags erstellt. Durch das zweite Compile Flag wird im Programmcode zumindest eine Codesequenz aktiviert, durch welche die Programmablaufsteuerungseinrichtung veranlasst wird, den Programmcode der Steuerungsanwendung bei einer Abweichung des Ablaufs der Steuerungsanwendung vom erwarteten Ablaufverhalten bis auf Weiteres zu verarbeiten. Dabei sind eine Ausgabe und Verarbeitung von Fehlermeldungen weiterhin möglich.

Vorteilhafterweise werden während eines Betriebs der Steuerungsanwendung in einer gesicherten Umgebung von der Programmablaufsteuerungseinrichtung ausgelöste Ereignisse durch die Überprüfungseinrichtung als falsch positive Alarme angelernt, die bei der Meldung eines entsprechenden Ereignisses nach Beendigung des Betriebs in der gesicherten Umgebung von der Überprüfungseinrichtung zu ignorieren sind. Somit können die Prüfregeln entsprechend den angelernten falsch positiven Alarmen erstellt bzw. aktualisiert werden. Darüber hinaus können in einer Anlernphase an die Überprüfungseinrichtung gemeldete Ereignisse entsprechend Anwenderinteraktion selektiv als kritisch oder unkritisch klassifiziert werden. Dementsprechend können die Prüfregeln entsprechend einer Klassifizierung der Ereignisse zuverlässig als kritisch oder unkritisch erstellt bzw. aktualisiert werden.

Das erfindungsgemäße System ist zur Durchführung eines Verfahrens entsprechend vorangehenden Ausführungen vorgesehen und umfasst zumindest eine Programmablaufsteuerungseinrichtung sowie eine von der Programmablaufsteuerungseinrichtung separierte Überprüfungseinrichtung. Die Programmablaufsteuerungseinrichtung ist dafür ausgestaltet, Steuerungsanwendungen jeweils zugeordneten Programmcode zu verarbeiten und für zumindest eine Steuerungsanwendung zumindest ein Ereignis festzulegen, das bei einer potentiellen Manipulation von der Steuerungsanwendung zugeordnetem Programmcode bzw. zumindest eines Peripheriegeräts, das an eine den Programmcode verarbeitende Programmablaufsteuerungseinrichtung angeschlossen ist, ausgelöst wird.

Die Programmablaufsteuerungseinrichtung ist erfindungsgemäß zusätzlich dafür ausgestaltet, einen Ablauf der Steuerungsanwendung auf Abweichungen von einem erwarteten Ablaufverhalten zu überwachen, bei einer Abweichung das festgelegte Ereignis auszulösen, den Programmcode nach Auslösung des festgelegten Ereignisses weiter zu verarbeiten und das Ereignis an die Überprüfungseinrichtung zu melden. Demgegenüber ist die Überprüfungseinrichtung dafür ausgestaltet, bei Meldung des Ereignisses das Ablaufverhalten der Steuerungsanwendung sowie zu dieser in einem Abhängigkeitsverhältnis stehende Steuerungskomponenten anhand aktualisierbarer Prüfregeln zu analysieren. Zusätzlich ist die Überprüfungseinrichtung dafür ausgestaltet, die Steuerungsanwendung und die zu dieser im Abhängigkeitsverhältnis stehenden Steuerungskomponenten bei Erkennung eines entsprechend den Prüfregeln unzulässigen Ablaufverhaltens der Steuerungsanwendung in einen vordefinierten sicheren Betriebszustand zu überführen.

Die erfindungsgemäße Programmablaufsteuerungseinrichtung ist für ein System entsprechend vorangehenden Ausführungen vorgesehen und dafür ausgestaltet, Steuerungsanwendungen jeweils zugeordneten Programmcode zu verarbeiten und für zumindest eine Steuerungsanwendung zumindest ein Ereignis festzulegen, das bei einer potentiellen Manipulation von der Steuerungsanwendung zugeordnetem Programmcode bzw. zumindest eines Peripheriegeräts, das an eine den Programmcode verarbeitende Programmablaufsteuerungseinrichtung angeschlossen ist, ausgelöst wird. Zusätzlich ist die Programmablaufsteuerungseinrichtung dafür ausgestaltet, einen Ablauf der Steuerungsanwendung auf Abweichungen von einem erwarteten Ablaufverhalten zu überwachen, bei einer Abweichung das festgelegte Ereignis auszulösen, den Programmcode nach Auslösung des festgelegten Ereignisses weiter zu verarbeiten und das Ereignis an eine von der Programmablaufsteuerungseinrichtung separierte Überprüfungseinrichtung zu melden.

Die erfindungsgemäße Überprüfungseinrichtung ist für ein System entsprechend vorangehenden Ausführungen vorgesehen und dafür ausgestaltet, bei Meldung eines festgelegten, durch eine Programmablaufsteuerungseinrichtung bei einer potentiellen Manipulation von einer Steuerungsanwendung zugeordnetem Programmcode ausgelösten Ereignisses ein Ablaufverhalten der Steuerungsanwendung sowie zu dieser in einem Abhängigkeitsverhältnis stehende Steuerungskomponenten anhand aktualisierbarer Prüfregeln zu analysieren. Zusätzlich ist die Überprüfungseinrichtung dafür ausgestaltet, die Steuerungsanwendung und die zu dieser im Abhängigkeitsverhältnis stehenden Steuerungskomponenten bei Erkennung eines entsprechend den Prüfregeln unzulässigen Ablaufverhaltens der Steuerungsanwendung in einen vordefinierten sicheren Betriebszustand zu überführen.

Die vorliegende Erfindung wird nachfolgend an einem Ausführungsbeispiel anhand der Zeichnung näher erläutert. Es zeigt
- Figur 1: ein industrielles Automatisierungssystem mit mehreren jeweils zumindest eine Steuerungsanwendung bereitstellenden Programmablaufsteuerungseinrichtungen und mit einer Überprüfungseinrichtung zur Analyse von durch die Programmablaufsteuerungseinrichtungen gemeldeten potentiellen Manipulationsversuchen,
- Figur 2: eine schematische Darstellung eines Meldungsverkehrs zwischen mehreren Programmablaufsteuerungseinrichtungen und der Überprüfungseinrichtung bei potentiellen Manipulationsversuchen.

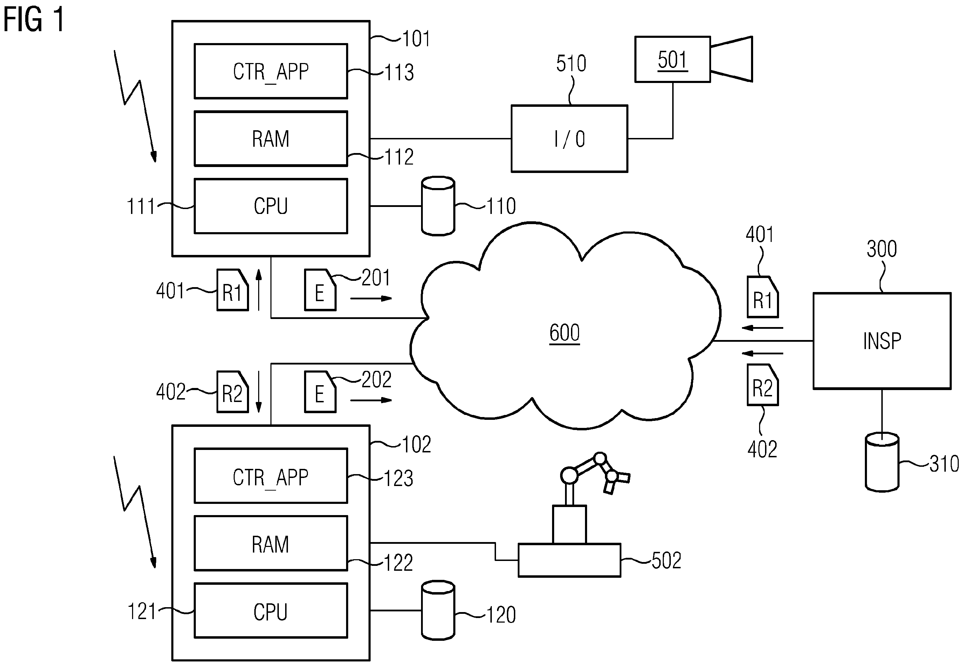

Das in Figur 1 dargestellte industrielle Automatisierungssystem umfasst mehrere jeweils ein Automatisierungsgerät implementierende Programmablaufsteuerungseinrichtungen 101-102 sowie eine separate Überprüfungseinrichtung 300 zur Analyse von Meldungen 201-202 der Programmablaufsteuerungseinrichtungen 101-102 über potentielle Manipulationsversuche. Die Programmablaufsteuerungseinrichtungen 101-102 und die Überprüfungseinrichtung 300 sind über ein industrielles Kommunikationsnetz 600 miteinander verbunden, das vorzugsweise als Time-Sensitive Network ausgestaltet ist, insbesondere entsprechend IEEE802.3-2018, IEEE 802.1Q-2018, IEEE 802.1AB-2016, IEEE 802.1AS-2011, IEEE 802.1BA-2011 bzw. IEEE 802.1CB-2017. Eine Weiterleitung von zeitkritischen Daten innerhalb des Kommunikationsnetzes 600 kann beispielsweise mittels Frame Preemption gemäß IEEE 802.1Q-2018, Time-Aware Shaper gemäß IEEE 802.1Q-2018, Credit-based Shaper gemäß IEEE 802.1Q-2018, Burst Limiting Shaper, Peristaltic Shaper bzw. Priority-based gesteuert werden.

Automatisierungsgeräte können insbesondere als speicherprogrammierbaren Steuerungen, Bedien- und Beobachtungsstationen, I/O-Controller oder I/O-Module ausgestaltet sein. Bedien- und Beobachtungsstationen dienen beispielsweise zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere können Bedien- und Beobachtungsstationen zur Anzeige von Werten eines Regelungskreises und zur Veränderung von Regelungsparametern verwendet werden. Bedien- und Beobachtungsstationen umfassen zumindest eine graphische Benutzerschnittstelle, ein Eingabegerät, eine Prozessoreinheit und ein Kommunikationsmodul.

Im vorliegenden Ausführungsbeispiel implementieren die Programmablaufsteuerungseinrichtungen 101-102 jeweils eine speicherprogrammierbare Steuerung. Speicherprogrammierbare Steuerungen umfassen typischerweise jeweils einen Prozessor 111, 121 zur Verarbeitung von Programmcode für Steuerungsanwendungen 113, 123, einen Arbeitsspeicher 112, 122 zum Laden des Programmcodes, ein Kommunikationsmodul sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung 101, 102 und einer durch die speicherprogrammierbare Steuerung 101, 102 gesteuerten Maschine oder Vorrichtung 501, 502. Die Steuerungsanwendungen sind insbesondere für eine Ermittlung geeigneter Steuerungsgrößen aus erfassten Messgrößen vorgesehen.

Zum Austausch von Steuerungs- und Messgrößen mit angeschlossenen Maschinen oder Vorrichtungen 501, 502 können grundsätzlich auch separate I/O-Module 510 vorgesehen sein. Eine Steuerung von I/O-Modulen kann insbesondere mittels eines I/O-Controllers pro Automatisierungszelle erfolgen. Alternativ hierzu können I/O-Module auch durch eine zugeordnete speicherprogrammierbare Steuerung angesteuert werden.

Im vorliegenden Ausführungsbeispiel wird zur gesicherten Ausführung der durch die Programmablaufsteuerungseinrichtungen 101, 102 bereitgestellten Steuerungsanwendungen 113, 123 pro Steuerungsanwendung 113, 123 zumindest ein Ereignis definiert und in einer Konfigurationsdatenbasis 110, 120 festgehalten, das bei einer potentiellen Manipulation von der jeweiligen Steuerungsanwendung 113, 123 zugeordnetem Programmcode bzw. eines Peripheriegeräts 510, das an eine Programmablaufsteuerungseinrichtung angeschlossen ist, ausgelöst wird. Ein solches Peripheriegerät ist im vorliegenden Ausführungsbeispiel das an die Programmablaufsteuerungseinrichtung 101 angeschlossene I/O-Modul 510. Die Anwendung der vorliegenden Erfindung ist jedoch keinesfalls auf diese Art von Peripheriegeräten beschränkt.

Die Programmablaufsteuerungseinrichtung 101, 102 überwachen jeweils einen Ablauf ihrer jeweiligen Steuerungsanwendung 113, 123 auf Abweichungen von einem erwarteten Ablaufverhalten und lösen bei einer Abweichung das jeweilige festgelegte Ereignis aus. Das jeweilige festgelegte Ereignis kann insbesondere eine Benennung einer Codestelle innerhalb des Programmcodes, eines Eintrittszeitpunkts des festgelegten Ereignisses, einer Ereignisart, einer Fehlerart bzw. einer Fehlerhäufigkeit umfassen. Abhängig von diesen Informationen und insbesondere aufgrund von Erfahrungen aus vorhergehenden gemeldeten Ereignissen kann die Überprüfungseinrichtung 300 entscheiden, ob ein Ereignis kritisch ist und weitere Maßnahmen zur Risikoeindämmung erforderlich sind, beispielsweise ein Stoppen der jeweiligen Steuerungsanwendung 113, 123.

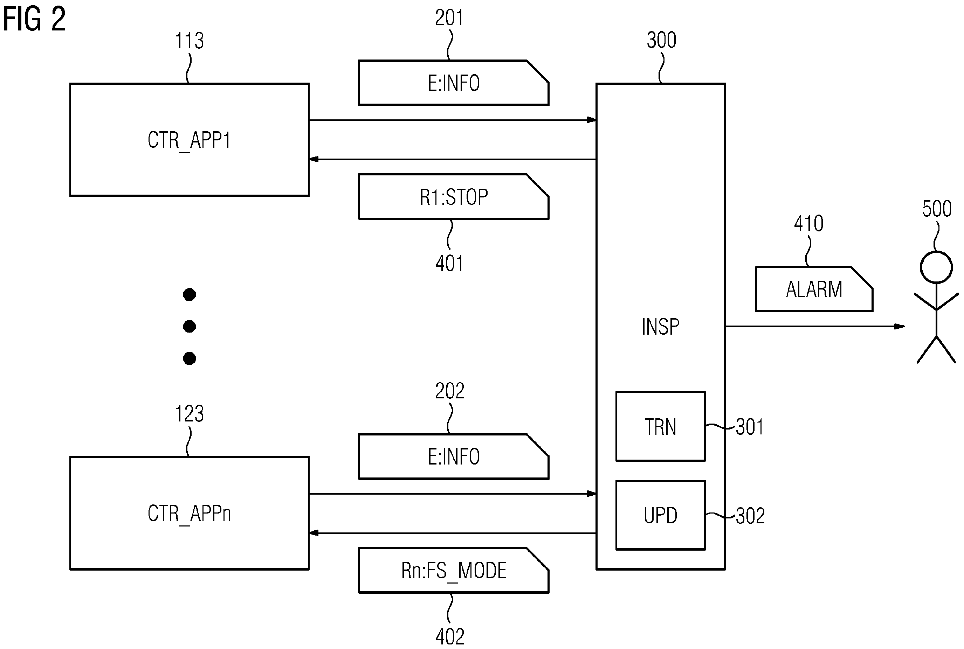

Nach Auslösung des jeweiligen festgelegten Ereignisses wird der Programmcode jeweils weiter durch die Programmablaufsteuerungseinrichtungen 101, 102 verarbeitet und das Ereignis an die Überprüfungseinrichtung 300 gemeldet. Dabei wird jeweils eine Meldung 201, 202 über eine Auslösung des jeweiligen festgelegten Ereignisses an die Überprüfungseinrichtung 300 übermittelt (siehe auch Figur 2).

Bei Meldung des jeweiligen festgelegten Ereignisses analysiert die Überprüfungseinrichtung 300 das Ablaufverhalten der jeweiligen Steuerungsanwendung 113, 123 sowie zu dieser in einem Abhängigkeitsverhältnis stehende Steuerungskomponenten, beispielsweise das I/O-Modul 510, anhand aktualisierbarer Prüfregeln, die einer Regeldatenbasis 310 der Überprüfungseinrichtung 300 hinterlegt sind. Die Prüfregeln können unabhängig vom Ablauf der jeweiligen Steuerungsanwendung 113, 123 aktualisiert werden. Hierzu weist die Überprüfungseinrichtung 300 ein Update-Modul 302 auf (siehe Figur 2).

Bei Erkennung eines entsprechend den Prüfregeln unzulässigen Ablaufverhaltens der jeweiligen Steuerungsanwendung überführt die Überprüfungseinrichtung 300 die Steuerungsanwendung 113, 123 und die zu dieser im Abhängigkeitsverhältnis stehenden Steuerungskomponenten in einen vordefinierten sicheren Betriebszustand. Hierzu übermittelt die Überprüfungseinrichtung 300 jeweils eine entsprechende Meldung 401, 402 mit einer Steuerungssequenz an die jeweilige Steuerungsanwendung 113, 123 bzw. Programmablaufsteuerungseinrichtung 101, 102. Vorteilhafterweise analysiert die Überprüfungseinrichtung 300 Manipulationen des der jeweiligen Steuerungsanwendung 113, 123 zugeordneten Programmcodes und der zu dieser im Abhängigkeitsverhältnis stehende Steuerungskomponenten in Kombination. Darüber hinaus analysiert die Überprüfungseinrichtung 300 das Ablaufverhalten der jeweiligen Steuerungsanwendung 113, 123 sowie die zu dieser im Abhängigkeitsverhältnis stehenden Steuerungskomponenten vorzugsweise abhängig von einem Betriebszustand der jeweiligen Programmablaufsteuerungseinrichtung 101, 102 bzw. von zumindest einem ausgewählten Zustand.

Der vordefinierte sichere Betriebszustand kann insbesondere ein Stoppen der Steuerungsanwendung 113, 123, ein Stoppen der zur Steuerungsanwendung 113, 123 im Abhängigkeitsverhältnis stehenden Steuerungskomponenten, beispielsweise des I/O-Moduls 510, ein Aktivieren eines Fehler-Betriebsmodus eines mittels der Steuerungsanwendung implementierten industriellen Automatisierungsgeräts bzw. eine Meldung 410 eines Alarms an einen Betreiber 500 des industriellen Automatisierungssystems umfassen (siehe Figur 2). Alternativ oder zusätzlich können die jeweilige Steuerungsanwendung 113, 123 und die zu dieser im Abhängigkeitsverhältnis stehenden Steuerungskomponenten durch eine Überführung in den vordefinierten sicheren Betriebszustand innerhalb einer festgelegten Zeitdauer nach der Meldung des Ereignisses gestoppt werden.

Entsprechend einer bevorzugten Ausführungsform wird der Programmcode für die Steuerungsanwendungen 113, 123 jeweils mittels eines ersten Compile Flags erstellt. Durch ein solches erstes Compile Flag, beispielsweise "-fsanitize=cfi" beim Clang compiler, im Programmcode wird jeweils eine Codesequenz zur Durchführung von Überprüfungen bei indirekten Funktionssprüngen aktiviert, wobei die Überprüfungen bei jedem Ablauf der jeweiligen Steuerungsanwendung 113, 123 durchgeführt werden. Durch die Überprüfungen wird bei Funktionsaufrufen insbesondere jeweils ein Funktionsprototyp einer aufgerufenen Funktion überprüft. Zusätzlich kann der Programmcode der jeweiligen Steuerungsanwendung 113, 123 jeweils mittels eines zweiten Compile Flags erstellt werden. Durch dieses zweite Compile Flag, beispielsweise "-fsanitize-recover=all" beim Clang Compiler, wird im Programmcode jeweils eine Codesequenz aktiviert, durch welche die Programmablaufsteuerungseinrichtung veranlasst wird, den Programmcode der jeweiligen Steuerungsanwendung 113, 123 bei einer Abweichung des Ablaufs der Steuerungsanwendung vom erwarteten Ablaufverhalten bis auf Weiteres zu verarbeiten.

Entsprechend Figur 2 umfasst die Überprüfungseinrichtung 300 neben dem Update-Modul 302 ein Trainings- oder Lernmodul 301. Mittels dieses Trainings- oder Lernmoduls 301 werden während eines Betriebs der jeweiligen Steuerungsanwendung 113, 123 in einer gesicherten Umgebung von der jeweiligen Programmablaufsteuerungseinrichtung 101, 102 ausgelöste Ereignisse durch die Überprüfungseinrichtung als falsch positive Alarme angelernt, die bei der Meldung eines entsprechenden Ereignisses nach Beendigung des Betriebs in der gesicherten Umgebung von der Überprüfungseinrichtung zu ignorieren sind. Die Prüfregeln werden dann entsprechend den angelernten falsch positiven Alarmen erstellt bzw. aktualisiert. Darüber hinaus können in einer Anlernphase an die Überprüfungseinrichtung 300 gemeldete Ereignisse entsprechend Anwenderinteraktion selektiv als kritisch oder unkritisch klassifiziert werden. Entsprechend einer Klassifizierung der Ereignisse als kritisch oder unkritisch werden die Prüfregeln dann erstellt bzw. aktualisiert.

Die Überprüfungseinrichtung 300 kann unterschiedliche Realisierungsformen annehmen, nämlich als integrierte, eigene Softwarekomponente auf einer Programmablaufsteuerungseinrichtung, als Komponente auf einem externen Gerät, das über eine I/O-Schnittstelle verbunden ist oder als Implementierung auf einem externen Server, beispielsweise einem Edge oder Cloud Computing Server.

Zur Aktualisierung der Prüfregeln für die Überprüfungseinrichtung 300 sind grundsätzlich noch weitere Ausführungsvarianten möglich:
- Die Anlernphase kann von einem Entwickler begleitet werden, der Fehler genauer analysiert und die Prüfregeln dementsprechend definiert bzw. aktualisiert.
- Die Überprüfungseinrichtung kann für eine Aktualisierung der Prüfregeln Verfahren anwenden, die auf künstlicher Intelligenz oder maschinellem Lernen basieren. Durch eine Analyse von häufigen, gleichen Fehler-Ereignissen eines oder mehrerer Binärdateien und insbesondere abhängig von Analysen nachfolgender Ereignisse, lernt die Überprüfungseinrichtung hinzu und passt dementsprechend ihre Überprüfungsregeln an. Damit ist ein Anlernen hin zu einer korrekten Analyse möglich.
- In Analysen der Überprüfungseinrichtung und in gegebenenfalls aktualisierte Prüfregeln kann vorteilhafterweise berücksichtigt werden, in welcher Umgebung die jeweilige Steuerungsanwendung bereitgestellt wird.
- Analysen kann vorteilhafterweise abhängig von einer Stelle eines Fehlerauftretens erfolgen. Beispielsweise erfolgt keine Reaktion, wenn ein Fehler in einem weniger kritischen Codesegment auftritt. Bei Codesegmenten mit kritischen Teilen, wie Funktionen für einen Netzwerkprotokoll-Stack, kann ein Fehler als kritisch angenommen werden und eine adäquate Maßnahme eingeleitet werden.
- In einer Whitelist für die Überprüfungseinrichtung kann darüber hinaus definiert werden, welche Fehler unkritisch sind und ignoriert werden können. Derartige Whitelists werden vorzugsweise ebenfalls aktualisiert.
- Ein Anlernen der Prüfregeln für die Überprüfungseinrichtung auf False Positives kann vor Produktivsetzung beispielsweise auch in einem digitalen Zwilling simuliert und optimiert werden.

## Patentansprüche

1. Verfahren zur gesicherten Ausführung von Steuerungsanwendungen, bei dem
- für zumindest eine Steuerungsanwendung (113, 123) zumindest ein Ereignis festgelegt wird, das bei einer potentiellen Manipulation von der Steuerungsanwendung zugeordnetem Programmcode und/oder zumindest eines Peripheriegeräts (510), das an eine den Programmcode verarbeitende Programmablaufsteuerungseinrichtung (101, 102) angeschlossen ist, ausgelöst wird,
- die Programmablaufsteuerungseinrichtung einen Ablauf der Steuerungsanwendung auf Abweichungen von einem erwarteten Ablaufverhalten überwacht und bei einer Abweichung das festgelegte Ereignis auslöst,
- der Programmcode nach Auslösung des festgelegten Ereignisses weiter durch die Programmablaufsteuerungseinrichtung verarbeitet wird und das Ereignis an eine von der Programmablaufsteuerungseinrichtung separierte Überprüfungseinrichtung (300) gemeldet wird,
- die Überprüfungseinrichtung bei Meldung (201, 202) des Ereignisses das Ablaufverhalten der Steuerungsanwendung sowie zu dieser in einem Abhängigkeitsverhältnis stehende Steuerungskomponenten anhand aktualisierbarer Prüfregeln analysiert,
- die Überprüfungseinrichtung die Steuerungsanwendung und die zu dieser im Abhängigkeitsverhältnis stehenden Steuerungskomponenten bei Erkennung eines entsprechend den Prüfregeln unzulässigen Ablaufverhaltens der Steuerungsanwendung in einen vordefinierten sicheren Betriebszustand überführt (401, 402).

2. Verfahren nach Anspruch 1,
bei dem das Ereignis eine Benennung einer Codestelle innerhalb des Programmcodes, eines Eintrittszeitpunkts des festgelegten Ereignisses, einer Ereignisart und/oder einer Fehlerart umfasst.

3. Verfahren nach einem der Ansprüche 1 oder 2,
bei dem der vordefinierte sichere Betriebszustand ein Stoppen der Steuerungsanwendung, ein Stoppen der zur Steuerungsanwendung im Abhängigkeitsverhältnis stehenden Steuerungskomponenten, ein Aktivieren eines Fehler-Betriebsmodus eines mittels der Steuerungsanwendung implementierten industriellen Automatisierungsgeräts und/oder eine Meldung eines Alarms an einen Betreiber eines das Automatisierungsgerät umfassenden industriellen Automatisierungssystems umfasst.

4. Verfahren nach einem der Ansprüche 1 bis 3,
bei dem die Steuerungsanwendung und die zu dieser im Abhängigkeitsverhältnis stehenden Steuerungskomponenten durch eine Überführung in den vordefinierten sicheren Betriebszustand innerhalb einer festgelegten Zeitdauer nach der Meldung des Ereignisses gestoppt werden.

5. Verfahren nach einem der Ansprüche 1 bis 4,
bei dem die Überprüfungseinrichtung Manipulationen des der Steuerungsanwendung zugeordneten Programmcodes und der zu dieser im Abhängigkeitsverhältnis stehende Steuerungskomponenten in Kombination analysiert.

6. Verfahren nach einem der Ansprüche 1 bis 5,
bei dem die Prüfregeln unabhängig vom Ablauf der Steuerungsanwendung aktualisiert werden.

7. Verfahren nach einem der Ansprüche 1 bis 6,
bei dem die Überprüfungseinrichtung das Ablaufverhalten der Steuerungsanwendung sowie die zu dieser im Abhängigkeitsverhältnis stehenden Steuerungskomponenten abhängig von einem Betriebszustand der Programmablaufsteuerungseinrichtung und/oder von zumindest einem ausgewählten Zustand analysiert.

8. Verfahren nach einem der Ansprüche 1 bis 7,
bei dem der Programmcode der Steuerungsanwendung mittels eines ersten Compile Flags erstellt wird, bei dem durch das erste Compile Flag im Programmcode zumindest eine Codesequenz zur Durchführung von Überprüfungen bei indirekten Funktionssprüngen aktiviert wird und bei dem die Überprüfungen bei jedem Ablauf der Steuerungsanwendung durchgeführt werden.

9. Verfahren nach Anspruch 8,
bei dem durch die Überprüfungen bei Funktionsaufrufen jeweils ein Funktionsprototyp einer aufgerufenen Funktion überprüft wird.

10. Verfahren nach einem der Ansprüche 1 bis 9,
bei dem der Programmcode der Steuerungsanwendung mittels eines zweiten Compile Flags erstellt wird und bei dem durch das zweite Compile Flag im Programmcode zumindest eine Codesequenz aktiviert wird, durch welche die Programmablaufsteuerungseinrichtung veranlasst wird, den Programmcode der Steuerungsanwendung bei einer Abweichung des Ablaufs der Steuerungsanwendung vom erwarteten Ablaufverhalten bis auf Weiteres zu verarbeiten.

11. Verfahren nach einem der Ansprüche 1 bis 10,
bei dem während eines Betriebs der Steuerungsanwendung in einer gesicherten Umgebung von der Programmablaufsteuerungseinrichtung ausgelöste Ereignisse durch die Überprüfungseinrichtung als falsch positive Alarme angelernt werden, die bei der Meldung eines entsprechenden Ereignisses nach Beendigung des Betriebs in der gesicherten Umgebung von der Überprüfungseinrichtung zu ignorieren sind, und bei dem die Prüfregeln entsprechend den angelernten falsch positiven Alarmen erstellt und/oder aktualisiert werden.

12. Verfahren nach einem der Ansprüche 1 bis 11,
bei dem in einer Anlernphase an die Überprüfungseinrichtung gemeldete Ereignisse entsprechend Anwenderinteraktion selektiv als kritisch oder unkritisch klassifiziert werden und bei dem die Prüfregeln entsprechend einer Klassifizierung der Ereignisse als kritisch oder unkritisch erstellt und/oder aktualisiert werden.

13. System zur Durchführung eines Verfahrens nach einem der Ansprüche 1 bis 12, wobei
- das System zumindest eine Programmablaufsteuerungseinrichtung und eine von der Programmablaufsteuerungseinrichtung separierte Überprüfungseinrichtung umfasst,
- die Programmablaufsteuerungseinrichtung dafür ausgestaltet ist, Steuerungsanwendungen jeweils zugeordneten Programmcode zu verarbeiten und für zumindest eine Steuerungsanwendung zumindest ein Ereignis festzulegen, das bei einer potentiellen Manipulation von der Steuerungsanwendung zugeordnetem Programmcode und/oder zumindest eines Peripheriegeräts, das an eine den Programmcode verarbeitende Programmablaufsteuerungseinrichtung angeschlossen ist, ausgelöst wird,
- die Programmablaufsteuerungseinrichtung zusätzlich dafür ausgestaltet ist, einen Ablauf der Steuerungsanwendung auf Abweichungen von einem erwarteten Ablaufverhalten zu überwachen, bei einer Abweichung das festgelegte Ereignis auszulösen, den Programmcode nach Auslösung des festgelegten Ereignisses weiter zu verarbeiten und das Ereignis an die Überprüfungseinrichtung zu melden,
- die Überprüfungseinrichtung dafür ausgestaltet ist, bei Meldung des Ereignisses das Ablaufverhalten der Steuerungsanwendung sowie zu dieser in einem Abhängigkeitsverhältnis stehende Steuerungskomponenten anhand aktualisierbarer Prüfregeln zu analysieren,
- die Überprüfungseinrichtung zusätzlich dafür ausgestaltet ist, die Steuerungsanwendung und die zu dieser im Abhängigkeitsverhältnis stehenden Steuerungskomponenten bei Erkennung eines entsprechend den Prüfregeln unzulässigen Ablaufverhaltens der Steuerungsanwendung in einen vordefinierten sicheren Betriebszustand zu überführen.

14. Programmablaufsteuerungseinrichtung für ein System nach Anspruch 13, wobei
- die Programmablaufsteuerungseinrichtung dafür ausgestaltet ist, Steuerungsanwendungen jeweils zugeordneten Programmcode zu verarbeiten und für zumindest eine Steuerungsanwendung zumindest ein Ereignis festzulegen, das bei einer potentiellen Manipulation von der Steuerungsanwendung zugeordnetem Programmcode und/oder zumindest eines Peripheriegeräts, das an eine den Programmcode verarbeitende Programmablaufsteuerungseinrichtung angeschlossen ist, ausgelöst wird,
- die Programmablaufsteuerungseinrichtung zusätzlich dafür ausgestaltet ist, einen Ablauf der Steuerungsanwendung auf Abweichungen von einem erwarteten Ablaufverhalten zu überwachen, bei einer Abweichung das festgelegte Ereignis auszulösen, den Programmcode nach Auslösung des festgelegten Ereignisses weiter zu verarbeiten und das Ereignis an eine von der Programmablaufsteuerungseinrichtung separierte Überprüfungseinrichtung zu melden.

15. Überprüfungseinrichtung für ein System nach Anspruch 13, wobei
- die Überprüfungseinrichtung dafür ausgestaltet ist, bei Meldung eines festgelegten, durch eine Programmablaufsteuerungseinrichtung bei einer potentiellen Manipulation von einer Steuerungsanwendung zugeordnetem Programmcode ausgelösten Ereignisses ein Ablaufverhalten der Steuerungsanwendung sowie zu dieser in einem Abhängigkeitsverhältnis stehende Steuerungskomponenten anhand aktualisierbarer Prüfregeln zu analysieren,
- die Überprüfungseinrichtung zusätzlich dafür ausgestaltet ist, die Steuerungsanwendung und die zu dieser im Abhängigkeitsverhältnis stehenden Steuerungskomponenten bei Erkennung eines entsprechend den Prüfregeln unzulässigen Ablaufverhaltens der Steuerungsanwendung in einen vordefinierten sicheren Betriebszustand zu überführen.
